# EUROPEAN PATENT SPECIFICATION

(11) **EP 3 996 873 B1**
(45) Date of publication and mention of the grant of the patent: **30.08.2023**
(21) Application number: 20758341.0
(22) Date of filing: 07.07.2020
(51) Int. Cl.: B24D 9/08, B24B 27/00, B24B 49/10, B25J 11/00

(54) **APPARATUS FOR VERIFYING THE PRESENCE, OR THE ABSENCE, OF AN ABRASIVE ELEMENT IN A MACHINE FOR WORKING SURFACES**
VORRICHTUNG ZUM ÜBERPRÜFEN DER ANWESENHEIT ODER ABWESENHEIT EINES SCHLEIFELEMENTS IN EINER MASCHINE ZUM BEARBEITEN VON OBERFLÄCHEN
APPAREIL PERMETTANT DE VÉRIFIER LA PRÉSENCE OU L'ABSENCE D'UN ÉLÉMENT ABRASIF DANS UNE MACHINE POUR LE TRAITEMENT DE SURFACES

(30) Priority: 11.07.2019 IT 201900011454
(43) Date of publication of application: 18.05.2022
(73) Proprietor: Fabrica Machinale S.r.l., 56023 Navacchio (PI) (IT)
(72) Inventor: BOSIO, Luca, 56124 Pisa (IT); VALLEGGI, Renzo, 56023 Cascina (PI) (IT)
(74) Representative: De Milato, Francesco
(86) International application number: PCT/IB2020/056360
(87) International publication number: WO 2021/005499

(56) References cited:
- WO-A1-2019/123310
- DE-A1-102012 006 502
- FR-A1- 2 999 107

## Description

### Field of the invention

The present invention relates to the technical field of the machines that are used for working surfaces that are able to move an abrasive element in the space, according to at least two degrees of freedom, and in particular it relates to an apparatus for detecting the presence of an abrasive element in a machine for working surfaces.

Furthermore, the invention relates to a method for carrying out such a verification.

### Background of the invention

As known, in order to carry out the operations for finishing surfaces made of different materials such as pottery, wood, plastic materials, metallic materials, etc. in order to improve their shape, and their tribological properties grinding machines, or sanding machines, equipped with an abrasive element, typically an abrasive disc, are commonly used.

In the automatic industrial machines for finishing surfaces of known type, an abrasive disc is moved with respect to the surface to be worked by an anthropomorphic arm, or however by a support that is mounted on guides in such a way that is possible to move the abrasive element at least in two different movement directions. Normally, the abrasive element is constrained to a support by engagement elements arranged to provide a removably engagement, for example by means of Velcro, or an adhesive tape, or also by elements that are able to provide a threaded coupling. In this latter case, a threaded blind hole that is made in the support and a threaded shaft protruding from the abrasive element, at the surface opposite to the abrasive surface, which, in working conditions, applies the abrasive action on the worked surface are provided. A very common type of threaded connection between support and abrasive disc, usually known in the technical field as "ROLOC", is, for example, described in US3562968.

After a certain number of working cycles, it is, anyway, necessary to replace the abrasive element, which, unavoidably, during working operations wears out, and, therefore, is no more able to exert an effective abrasive action.

Normally, the replacement operation of the abrasive element is carried out manually by an operator con with consequent loss of time, and productivity decreasing for the machine. Furthermore, the manual replacement of the abrasive element brings with it the risk to apply the new abrasive disc to the support in a wrong way, and therefore that, during the working operations, the abrasive disc can be removed from the correct position, thus compromising the operation.

In order to overcome the aforementioned drawbacks in WO2015/125068 an apparatus is provided that is able to carry out automatically the replacement of an abrasive element. In particular the solution described in WO2015/125068 provides a removal station in which a removal device operates that is provided with a sharp edge. It is, furthermore, provided a displacement device to move the support with respect to the removal device up to obtain a removal position in which the sharp edge is interposed between the abrasive element and the support and, therefore, causes the abrasive element to be detached from the support. In these machines at least a detection device is, furthermore, provided to verify at the end of the application operation the presence of a new abrasive element at the backing pad, or the absence of the same between a removal and an application operations. In this way, if the removal operation has failed, it is avoided that the displacement device can move the support body at an application station, where the presence of the worn abrasive element would make it not possible to apply the new abrasive element, or that the backing pad not provided with the abrasive element due to an incorrect positioning of the new abrasive element, could be moved at the surface to be worked with the risk to damage the same. Usually, the detection device comprises a colour detection sensor. Therefore, the abrasive surface of the abrasive element is, normally, of a different colour with respect to the engagement surface of the support body. Therefore, depending on the colour that is detected, the colour detection sensor is able to verify the presence, or the absence, of the abrasive element at the support body.

However, this solution does not seem to be satisfactory. In fact, after some working cycles dusts of material removed from the worked surface can adhere to the surface of the abrasive element, thus compromising the correct detection of the colour by the colour detection sensor and, therefore, screw the result of the aforementioned detection operation.

Analogous problems are also encountered with optical detection sensors of different kind, such as photocells, also in this case due to the presence of dusts adhering to the surface of the abrasive element.

Other examples of machines for working the surfaces with analogous drawbacks are described in WO2019/123310, which forms the basis for the preamble of claim 1, as well as in documents FR2999107 and DE102012006502.

### Summary of the invention

It is, therefore, an object of the present invention to provide an apparatus for verifying the presence of an abrasive element in a machine for finishing surfaces, in particular a grinding machine, a polishing machine, or a sanding machine, which allows to overcome the aforementioned drawbacks of prior art solutions.

It is, in particular, an object of the present invention to provide a similar apparatus that is able to accurately detect the presence, or the absence, of an abrasive element at the support, or backing pad of the machine for finishing surfaces.

It is also an object of the present invention to provide a method for verifying the presence of an abrasive element in a machine for finishing surfaces, in particular a grinding machine, a polishing machine, or a sanding machine, that has the aforementioned advantages with respect to the methods used in the prior art.

These and other objects are achieved by an apparatus, according to claim 1.

Other technical characteristics of the invention and relative embodiments are defined in the dependent claims.

According to the invention, a method for verifying the presence, or the absence, of an abrasive element in a machine for finishing surfaces provided by claim 15.

### Brief description of the drawings

The invention will be now illustrated with the following description of an exemplary embodiment thereof, exemplifying but not limitative, with reference to the attached drawings wherein:
- Fig. 1A diagrammatically shows a side elevational perspective view of a possible embodiment of an apparatus, according to the invention, for verifying the presence, or the absence, of an abrasive element in a machine for finishing surfaces;
- Fig. 1B diagrammatically shows a side elevational perspective view of an enlargement of a portion of figure 1A in order to highlight some technical characteristics;
- Fig. 1C diagrammatically shows a disassembled configuration of an abrasive element and a support body according to the invention in order to highlight some technical characteristics;
- Fig. 2A diagrammatically shows a side elevational perspective view of an alternative embodiment of the apparatus of figure 1A for verifying the presence, or the absence, of an abrasive element in a machine for finishing surfaces;
- Fig. 2B diagrammatically shows a side elevational perspective view, of an enlargement of a portion of figure 2A in order to highlight some technical characteristics;

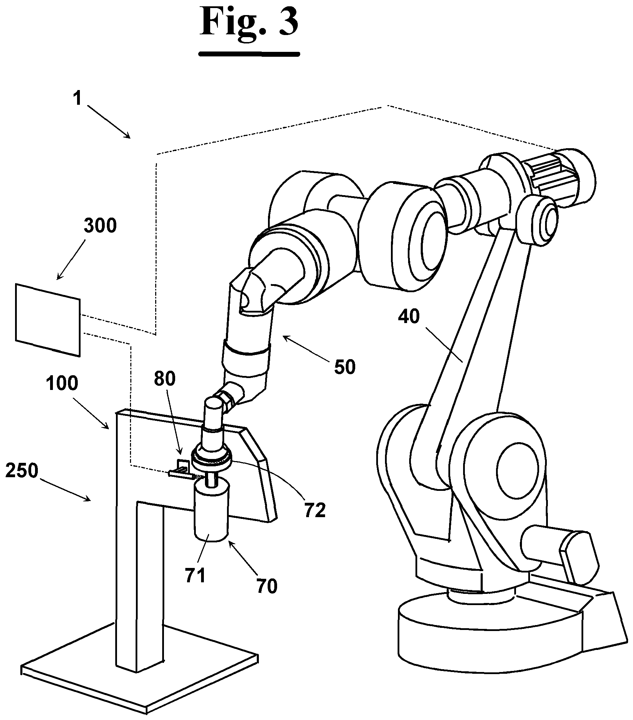

- Fig. 3 diagrammatically shows in side elevational perspective view of the apparatus of figure 1A in a working step;
- Fig. 4 diagrammatically shows a side elevational perspective view of a possible working configuration of the apparatus, according to the invention, to verify the presence, or the absence, of an abrasive element in a machine for finishing surfaces;
- Fig. 5 diagrammatically shows a side elevational perspective view of an embodiment according to the invention for a control device of which the apparatus of figure 1A can be equipped with;

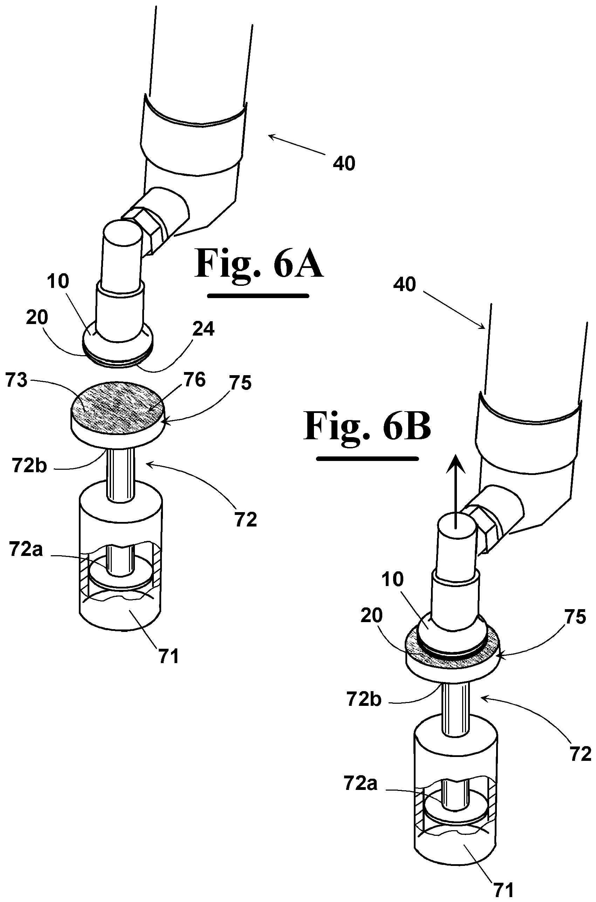

- the figures 6A and 6B diagrammatically show a side elevational perspective view of a possible working configuration of the apparatus of figure 1A, in the case that the abrasive element is still engaged to the support body;
- Fig. 7 diagrammatically shows a side elevational perspective view of a possible working configuration of an alternative embodiment of the apparatus of figure 4 to verify the presence, or the absence, of an abrasive element in a machine for finishing surfaces;
- Fig. 8 diagrammatically shows a front elevational perspective view of a possible embodiment provided for the control element of which the apparatus according to the invention is equipped with;
- Fig. 9 diagrammatically shows a side elevational perspective view of still another alternative embodiment of the apparatus of figure 1;
- Fig. 10 diagrammatically shows in side elevational perspective view of an enlargement of a portion of figure 9 in order to highlight some technical characteristics.

### Detailed description of some exemplary embodiments of the invention

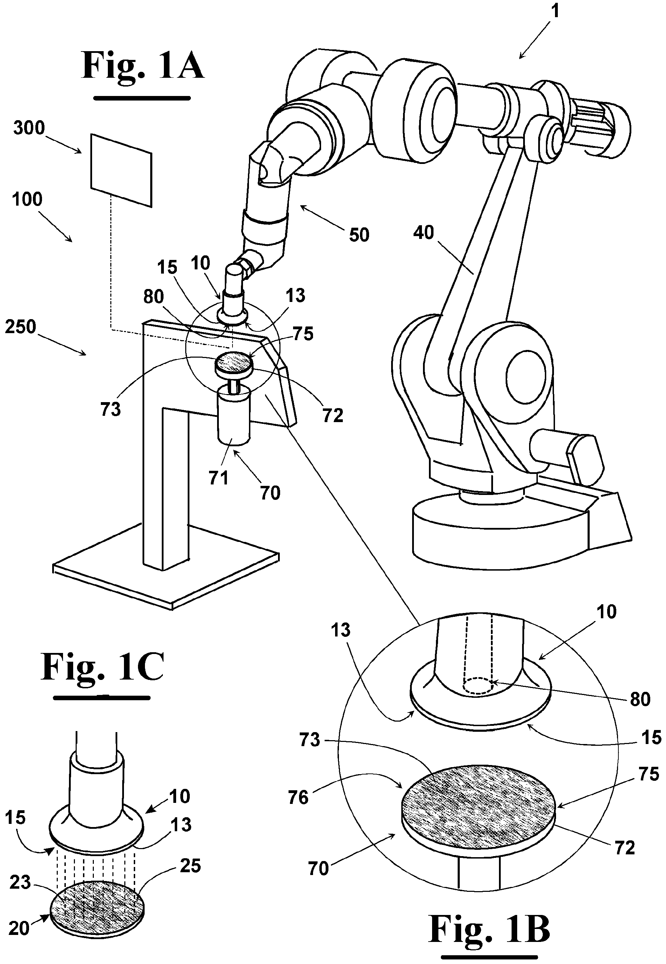

In figure 1A, an apparatus 100, according to the invention, for verifying the presence, or absence, of an abrasive element 20 in a machine for finishing surfaces 1, in particular at a support body 10, or backing pad, of the same is diagrammatically shown. More precisely, the apparatus 100 can be provided with a working head 50 integral to the aforementioned support body 10 having an engagement surface 15 arranged to engage the engagement surface 25 of an abrasive element 20. This, at the side opposite to the engagement surface 25, is preferably provided with an abrasive surface 24 arranged to provide a grinding action at the surface to be worked. More precisely, the support body 10 and the abrasive element 20, at the respective engagement surfaces 15 and 25, are provided with first and second engagement elements 13 and 23 configured to reversibly mutually engage with each other (see figures 1C). These are configured to move from an engagement configuration to a disengagement configuration, or vice versa. According to an embodiment of the present invention, the aforementioned first and second engagement elements 13 and 23 can bee, respectively, first and second portions of predetermined size of a touch fastener arranged to reversibly mutually engage with each other, also called, respectively, "male Velcro" and "female Velcro". Alternately, the aforementioned first and second engagement elements 13 and 23 can be arranged to snap engage one with the other. In this case, the first engagement elements 13 can comprises at least a protrusion 13 and the second engagement elements at least a recess 23, or vice versa.

The apparatus 100, according to the invention, furthermore, provides a displacement device 40 configured to move the support body 10 in the space according to at least 1 degree of freedom. Even though in the figures from 1A to 7, the displacement device 40 is diagrammatically shown as a anthropomorphic robot, in fact, the displacement device 40, according to the invention, can be configured to move the support body 10 according to one, or more, translational degrees of freedom, or one, or more, rotational degrees of freedom, or according to a combination of movements comprising at least a translational degree of freedom and a rotational degree of freedom and overall according to a number of degrees of freedom comprises between 2 and 6. In particular, the displacement device 40 can be configured to cause at least a rotation of the support body 10 about a rotation axis 110 with respect to the working head 50. It is foreseen the possibility that the finishing machine 1 is of a roto-orbital machine and, therefore, that, the displacement device 40 is configured to move the support body 10, in such a way that the same describes an eccentric orbit with respect to the axis of the working head 50.

According to the present invention, furthermore, the apparatus 100 provides at least a control station 250 to verify the presence, or the absence, of the abrasive element 20 at the support body 10. More in particular, the aforementioned control station 250 is equipped with a control device 70. This comprises a control element 75 provided with a control surface 76 equipped with third engagement elements 73 configured to engage with the first engagement elements 13 of support body 10. For example, the third engagement elements 73, as well as the second engagement elements 23, can provide at least a portion of "female Velcro", or "male Velcro". In the first case, the first engagement elements 13 are constituted by at least a portion of "male Velcro". In the second case, instead, the first engagement elements 13 are constituted by at least a portion of "female Velcro". Analogously, in the case that the first and the second engagement elements 13 and 23 provide at least a protrusion 13 and at least a recess 23, or vice versa, arranged to snap engage one with the other, the third engagement elements 73 provide, respectively, a recess, or a protrusion.

More precisely, the verification of the presence, or absence, of the abrasive element 20 at the support body 10, provides that the aforementioned displacement device 40 brings the support body 10 same, or, if present, the abrasive element 20 constrained to the same, into contact with the control surface 76 of the control element 70. Then, the displacement device 40 is operated in such a way to cause a movement of the support body 10, for example a translation along a predetermined direction, or a rotation, or a combination of movements. However, in general, the displacement device 40 can be arranged to apply a predetermined force, in particular a detachment force, to move the support body 10 away from the control element 75.

More in particular, the apparatus 100 provides also a detection device 80 configured to detect any engagement of the support body 10 with the aforementioned control element 75. In particular, the detection device 80 is configured to carry out the aforementioned detection, once that the support body 10, or the abrasive element 20 engaged to it, if present, has been positioned into contact with the control element 75 and has been moved by the displacement device 40.

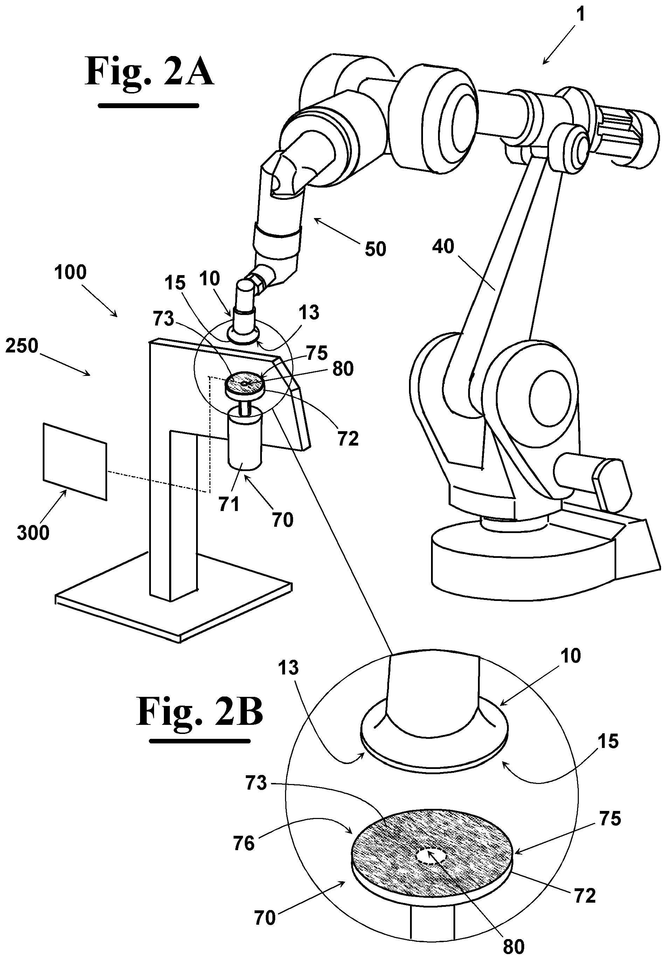

More in detail, according to a possible embodiment, the detection device 80, can be configured to detect the force applied by the displacement device 40 at the support body 10 (figures 1A and 1B), or the control element 75 (figures 2A and 2B), to move the support body 10 with respect to the control element 75.

In particular, in the embodiment shown in the figures 1A and 1B, the detection device 80 is provided integral to the support body 10. In this case, if after having brought the support body 10 into contact with the control element 75 will be necessary, by the displacement device 40, to apply a force greater than a predetermined threshold value, to cause the aforementioned movement of the support body 10, will mean that the aforementioned engagement between the support body 10 and the control element 75 has taken place.

Instead, if the force that is necessary to cause a displacement of the support body 10 will be less than the aforementioned threshold value, will mean that the support body 10 has not been engaged, due to the presence of the abrasive element 20 constrained to the same, to the control element 75.

In the embodiment shown in the figures 2A and 2B, instead, the detection device 80 is provided integral to the control element 75. In this case, if an engagement between the support body 10 and the control element 75 takes place, the movement of the support body 10 by the displacement device 40 will produce a force on the control element 75 greater than a predetermined threshold value. Instead, if the support body 10 and the control element 75 does not engage with each other, the force that will be applied on the control element 75 during the aforementioned movement will not be able to produce any force on the control element 75, or anyway a force less than the aforementioned predetermined threshold value.

Both in the embodiment shown in the figures 1A and 1B, and in the embodiment shown in the figures 2A and 2B, the detection device 80, advantageously, comprises at least a force sensor.

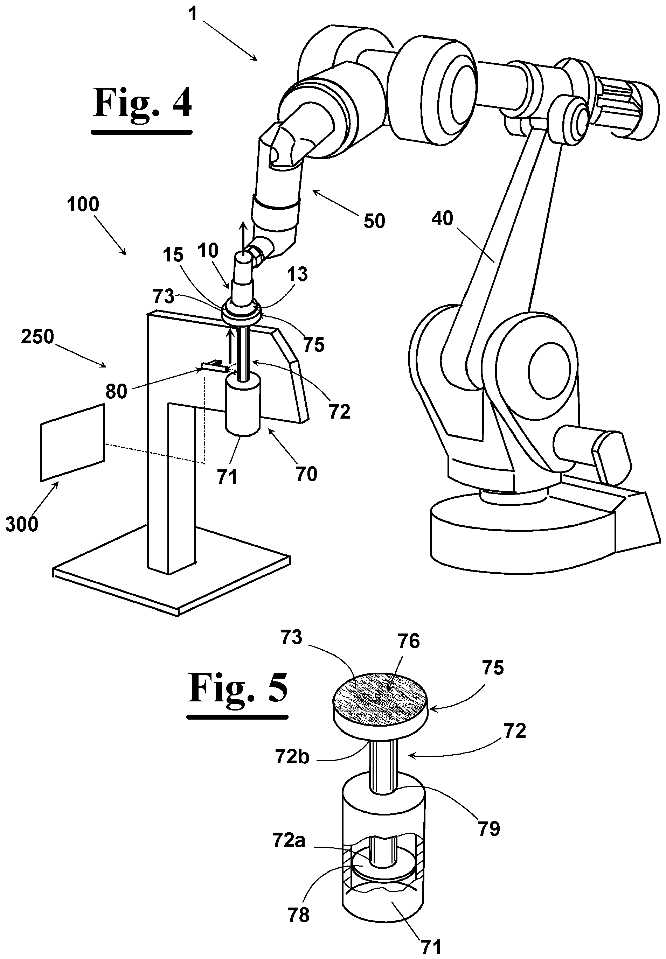

In the figures from 3 to 7 some possible alternative embodiments of the present invention are shown, in which the control element 75 can move with respect to a fixed base body 71. In this case, the detection device 80 can be advantageously configured to detect any movement of the control element 75 with respect to the fixed base body 71, during the aforementioned movement of the support body 10 by the displacement device 40. More precisely, in the case that the abrasive element 20 is not present at the support body 10, the third engagement elements 73 of the control surface 76 engage with the first engagement elements 13 of the engagement surface 15 of the support body 10. Therefore, the aforementioned movement caused by the displacement device 40 will cause a movement of the control element 75 that will be, therefore, detected by the detection device 80 (figure 4).

Instead, in the case that the abrasive element 20 is present at the support body 10, as diagrammatically shown in the figures 5A and 5B, the aforementioned first and third engagement elements 13 and 73 cannot engage with each other, because the third engagement elements 73 will enter into contact with the abrasive surface of the abrasive element 20 and not with the engagement surface 15 provided with the first engagement elements 13 of the support body 10. Therefore, the detection device 80 will not detect any movement of the control element 75 with respect to the fixed base body 71, or, anyway, a movement shorter than a predetermined displacement Δs, due to the interaction between the support body 10, or more precisely between the abrasive element 20 and the control element 75.

More in detail, according to the embodiments shown in the figures from 3 to 7, the detection device 80 can comprise, advantageously, at least a movement sensor and/or at least an accelerometer and/or at least a rotation sensor and/or at least an encoder and/or at least a limit position sensor.

In the example that is diagrammatically shown in the figures from 4 to 6B, the control element 75 is configured to translate with respect to the fixed base body 71. In this case, therefore, the displacement device 40 is, advantageously, arranged to cause the support body 10 to translate along a predetermined translation direction.

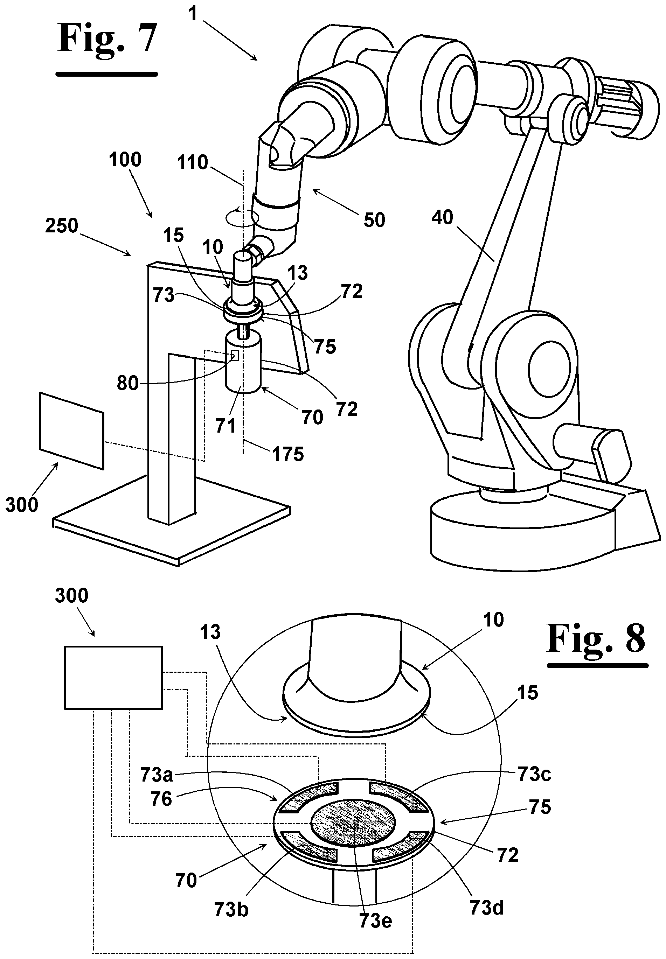

In the alternative embodiment of figure 7, instead, the control element 75 is configured to rotate about a first predetermined rotation axis 175 with respect to the fixed base body 71. In this case, therefore, the displacement device 40 will be arranged to cause the support body 10 to rotate about a second predetermined rotation axis 110. Advantageously, the rotation axis 175 and the rotation axis 110 can be parallel one another, in particular coincident, or can be inclined at a predetermined angle one with respect to the other.

According to an embodiment, diagrammatically shown in particular in figure 5, the fixed base body 71 is hollow, for example with cylindrical shape, and a stem 72 is provided having an end 72a slidingly mounted within the cavity of the fixed base body 71, and the opposite end 72b fixed to the verification element 75. In this case, the detection device 80 can be configured to detect the displacement of the control element 75 by detecting the displacement of the stem 72.

In particular, the control device 70 can provide a stop element 78 configured to stop the movement of the control element 75 with respect to the fixed base body 71. More in particular, in the example of figure 5, the stop element 78, once that a predetermined limit position is reached, can be arranged to cause the first engagement elements 13 and the third engagement elements 73 to disengage from each other after a predetermined translation stroke, or a predetermined rotation, of the control element 75 with respect to the fixed base body 71.

Advantageously, the stop element 78 can be configured to move the control element 75 back to a starting position with respect to the fixed base body 71. According to a possible embodiment of the invention, the stop element can be an elastic element, for example a linear spring, or an actuator, in particular a pneumatic actuator, advantageously with adjustable pressure, as diagrammatically shown in figure 5, arranged to oppose the aforementioned displacement by applying a predetermined force. More in particular, in this case, the force applied by the stop element on the control element 75 is substantially constant.

According to the present invention, it is possible to move in sequence the displacement device 40 for positioning the same in different positions with respect to the control element 75. In this way, it is possible to avoid that the missing engagement of the first and the third engagement elements 13 and 73 can be caused by a not correct relative positioning between the support body 10 and the control element 75 and, therefore, that the missing detection by the detection device 80 could be skewed.

In the further alternative embodiment of figure 8, the control element 75 is provided with a plurality of control surfaces 73, in the case that is shown in figure 8, 5 control surfaces 73a-73e. In particular, each control surface 73a-73e can be provided with a sensor working independently from the others. More in particular, the aforementioned detection device 80 can, in this case, provide a plurality of detection elements, not shown in the figures for simplicity, each of which operatively connected to a respective control surface 73a-73e, in such a way to detect if any engagement have taken place, or not, with the respective portion of the support body 10. This solution allows to detect, in particular, the presence of one, or more, fragments, of the abrasive element 20 engaged with the support body 10 also after having carried out a removal operation. In fact, in particular in the presence of aqueous solutions, during a working cycle, the abrasive element 20 can beak apart and, therefore, considerably reduce its surface and produce a fragment, or more, fragments separated one from the others. Therefore, in these cases, it is possible that the removal operation can fail.

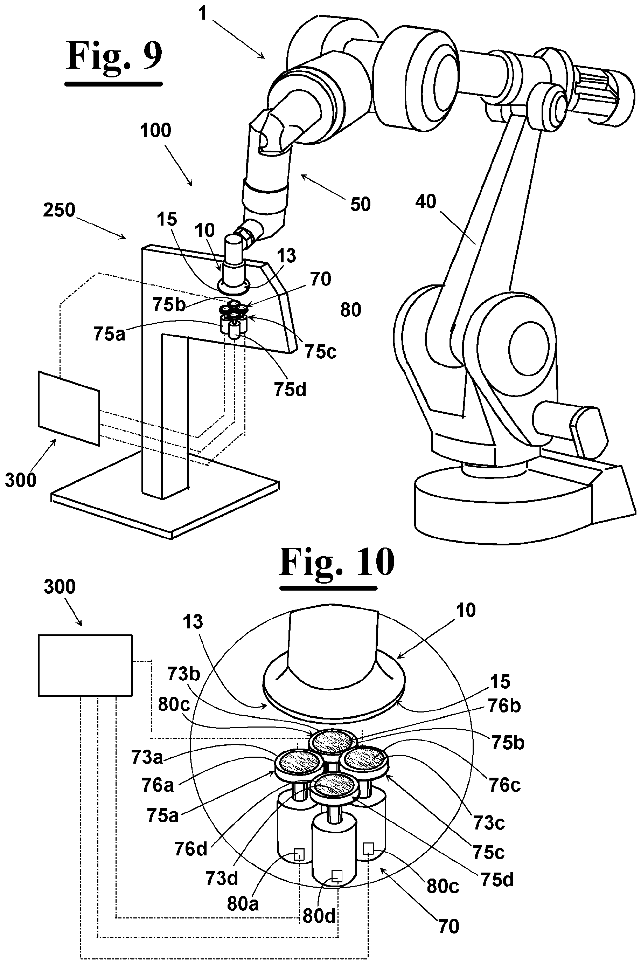

In the further alternative embodiment diagrammatically shown in the figures 9 and 10, the control device 70 comprises a plurality of control elements 75, for example 4 control elements 75a-75d. Each control element 75a-75d has a respective control surface 76a-76d provided with respective third engagement elements 73a-73d, each of which configured to engage with said first engagement elements 13 of the support body 10, or with a predetermined portion of the same. In this case, each control element 75a-75d can be advantageously associated to a respective detection device 80a-80d, each of which configured to detect if any engagement between the respective control element 75a-75d and the support body 10, or more precisely, a respective portion of this, has taken place, during the movement of the support body 10 by the displacement device 40.

Therefore, in this way, it is possible to detect very accurately also the presence of a single fragment, or portion, of an abrasive element 20 at the support body 10 in a very selective and accurate way.

It is also foreseen the possibility that the stop element is a passive pneumatic actuator arranged to generate a negative pressure, and not a positive pressure, as in the previous case, on a configurable reservoir. In particular, in this case the force applied by the stop element on the control element 75 is an increasing force.

As diagrammatically shown in the figures from 1A to 10, the apparatus 100 can comprise, furthermore, a processing unit 300 configured to receive and elaborate the data detected by the detection device 80 and in case to command the displacement device 40 to repeat the verification, in particular both after having verified the presence, or the absence of the abrasive element 20 at the support body 10, or to go back to a removal station if present and carry out the removal operation of the abrasive element 20 from the support body 10, in case that the presence of the abrasive element 20 at the support body 10 has been detected, or to an application station and carry out the application of a new abrasive element 20 to the support body 10, in case that the absence of the abrasive element 20 at the support body 10 has been verified.

According to the invention, in fact, the apparatus 100, in addition to the aforementioned machine for finishing surfaces 1, as described above, can comprise at least a removal station, not shown in the figures for reasons of simplicity, configured to remove the worn abrasive element 20 from the support body 10 and/or at least an application station, also this not shown in the figures for reasons of simplicity, for applying a new abrasive element 20 al support body 10. In particular, the aforementioned control station for verifying the presence, or absence, of the abrasive element 20 at the support body 10 can be positioned between the removal station and the application station of a new abrasive element 20.

The foregoing description of a specific embodiment will so fully reveal the invention according to the conceptual point of view, so that others, by applying current knowledge, will be able to modify and/or adapt for various applications such an embodiment without further research and without departing from the scope of the invention, as defined by the appended claims.

## Claims

1. An apparatus (100) to verify the presence, or the absence, of an abrasive element (20) in a machine (1) for finishing surfaces, said machine (1) comprising:
- a support body (10) configured to removably engage said abrasive element (20), said support body (10) and said abrasive element (20) being, respectively, provided, at respective engagement surfaces (15,25) with first and second engagement elements (13,23) configured to move from an engagement configuration to a disengagement configuration, and vice versa;
- a displacement device (40) configured to move said support body (10) in the space according to at least 1 degree of freedom;
said apparatus (100) comprising:
- at least a control station (250) arranged to verify the presence, or the absence, of said abrasive element (20) at said support body (10);
- a control device (70) arranged in said control station (250) and comprising a control element (75) having a control surface (76), said displacement device (40) being arranged to bring said support body (10), or the abrasive element (20) constrained to the same, if present, into contact with said control surface (76) of said control element (75) and to cause a movement of said support body (10);
- a detection device (80) configured to detect if an engagement between said control element (75) and said support body (10) has taken place, during said movement of said support body (10) by said displacement device (40);
said apparatus being **characterized in that** said control surface (76) is provided with third engagement elements (73) configured to engage with said first engagement elements (13) of said support body (10).

2. Apparatus (100) according to claim 1, wherein said detection device (80) is configured to detect the force applied by said displacement device (40) on said support body (10), or said control element (75), to move said support body (10) with respect to said control element (75), after having brought said support body (10), or the abrasive element (20) constrained to the same, if present, into contact with said control element (75).

3. Apparatus (100) according to claim 1, wherein said control element (75) is operatively connected free to move to a fixed base body (71), and wherein said detection device (80) is configured to detect lo displacement of said control element (75) with respect to said fixed base body (71) caused by said movement of said support body (10) with respect to said control element (75), after having brought said support body (10), or the abrasive element (20) constrained to the same, if present, into contact with said control element (75).

4. Apparatus (100) according to any of the previous claims, wherein said detection device (80) is selected from the group comprising:
- at least a force sensor;
- at least a movement sensor;
- at least an accelerometer;
- at least a rotation sensor;
- at least an encoder;
- at least a limit position sensor;
or a combination thereof.

5. Apparatus (100) according to any of the previous claims, wherein a stop element (78) is, furthermore, provided configured to stop said movement of said control element (75) with respect to said fixed base body (71), and to cause said first engagement elements (13) to be disengaged from said third engagement elements (73), wherein said stop element (78) is configured to move said control element (75) back to a starting position with respect to said fixed base body (71) .

6. Apparatus (100) according to any of the previous claims, wherein said control element (75) is configured to translate with respect to said fixed base body (71), and wherein said displacement device (40) is arranged to cause said support body (10) to translate along a predetermined translation direction.

7. Apparatus (100) according to any of the previous claims, wherein said control element (75) is configured to rotate about a first predetermined rotation axis (175) with respect to said fixed base body (71), and wherein said displacement device (40) is arranged to cause said support body (10) to rotate about a second predetermined rotation axis (110) of.

8. Apparatus (100) according to claim 3, wherein said fixed base body (71) is hollow and is a stem (72) is provided having an end (72a) slidingly mounted within said fixed hollow base body (71) and another end (72b) fixed to said control element (75), said detection device (80) being arranged to detect the displacement of said control element (75) by detecting of the displacement of said stem (72).

9. Apparatus (100) according to any of the previous claims, wherein said first and second engagement elements (13,23) are arranged to snap engage one with the other.

10. Apparatus (100) according to any of the previous claims, wherein said first and second engagement elements (13,23) comprise, respectively, first and second portions of Velcro arranged to reversibly mutually engage with each other.

11. Apparatus (100) according to any of the previous claims, wherein said displacement device (40) is an anthropomorphic robot having a number of degrees of freedom set between 2 and 6.

12. Apparatus (100) according to any of the previous claims, wherein said control device (70) comprises a plurality of control elements (75a-75d), wherein each control element (75a-75d) is provided with a respective control surface (76a-76d) provided with respective third engagement elements (73a-73d), and wherein each third engagement element (73a-73d) is configured to engage said first engagement elements (13) of said support body (10), or a predetermined portion of the same, wherein each control element (75a-75d) of said plurality is associated to a respective detection device (80a-80d), each of which configured to detect if an engagement of the respective control element (75a-75d) with a respective portion of said support body (10) has taken place, during the movement of said support body (10) by said displacement device (40).

13. Apparatus (100) according to any of the previous claims, wherein a processing unit (300) is, furthermore, provided configured to receive and elaborate the data detected by said detection device (80) and wherein at least a removal station is, furthermore, provided configured to remove said worn abrasive element (20) by said support body (10), said processing unit (300) being configured to command said displacement device (40) to position again at said control station (250) to verify again the presence, or the absence, of said abrasive element (20) at said support body (10), or, after having verified at said control station (250) the presence of said support element (20) on said support body (10), to go back to said removal station and to carry out a removal operation of said abrasive element (20) from said support body (10).

14. Apparatus (100) according to claim 13, comprising, furthermore, at least an application station configured to apply a new abrasive element (20) to said support body (10), said processing unit (300) being configured to command said displacement device (40), to position again at said control station (250) to verify again the presence, or the absence, of said abrasive element (20) at said support body (10), or after having verified in said control station (250) the absence of said abrasive element (20) at said support body (10) to go back to said removal station and carry out an application operation of said new abrasive element (20) at said support body (10).

15. A method for verifying the presence, or absence, of an abrasive element (20) with an apparatus according to any of the previous claims in a machine (1) for finishing surfaces provides the steps of:
- providing a support body (10) configured to removably engage said abrasive element (20), said support body (10) and said abrasive element (20) being provided, at respective engagement surfaces (15,25), respectively of first and second engagement elements (13, 23) configured to move from an engagement configuration to a disengagement configuration;
- providing a displacement device (40) configured to move said support body (10) in the space according to at least 1 degree of freedom;
- providing a control element (75) having a control surface (76);
- bringing said support body (10), or said abrasive element (20) engaged to said support body (10), if present, into contact with said control surface (76);
- displacing said support body (10) by said displacement device (40); and
- detecting if any engagement between said control element (75) and said support body (10) have taken place, by a detection device (80), during said movement of said support body (10) by said displacement device (40);
said method being **characterized in that** said control surface (76) is provided with third engagement elements (73) configured to engage with said first engagement elements (13) of said engagement surface of said support body (10).

## Patentansprüche

1. Vorrichtung (100) zum Überprüfen des Vorhandenseins oder des Fehlens eines Schleifelements (20) in einer Maschine (1) zum Endbearbeiten von Oberflächen, wobei die Maschine (1) umfasst:
- einen Stützkörper (10), der dazu konfiguriert ist, lösbar mit dem Schleifelement (20) in Eingriff zu kommen, wobei der Stützkörper (10) und das Schleifelement (20) jeweils an entsprechenden Eingriffsflächen (15,25) mit ersten und zweiten Eingriffselementen (13,23) versehen sind, die dazu konfiguriert sind, sich von einer Eingriffskonfiguration in eine Lösekonfiguration und umgekehrt zu bewegen;
- eine Verschiebevorrichtung (40), die dazu konfiguriert ist, den Stützkörper (10) in dem Raum entsprechend mindestens 1 Freiheitsgrad zu bewegen;
wobei die Vorrichtung (100) umfasst:
- mindestens eine Steuerstation (250), die dazu eingerichtet ist, das Vorhandensein oder Fehlen des Schleifelements (20) an dem Stützkörper (10) zu überprüfen;
- eine Steuervorrichtung (70), die in der Steuerstation (250) eingerichtet ist und ein Steuerelement (75) mit einer Steuerfläche (76) umfasst, wobei die Verschiebevorrichtung (40) dazu eingerichtet ist, den Stützkörper (10), oder das auf denselben beschränkte Schleifelement (20), falls vorhanden, mit der Steuerfläche (76) des Steuerelements (75) in Kontakt zu bringen und eine Bewegung des Stützkörpers (10) zu bewirken;
- eine Erfassungsvorrichtung (80), die dazu konfiguriert ist, zu erfassen, ob während der Bewegung des Stützkörpers (10) durch die Verschiebevorrichtung (40) ein Eingriff zwischen dem Steuerelement (75) und dem Stützkörper (10) stattgefunden hat;
wobei die Vorrichtung **dadurch gekennzeichnet ist, dass** die Steuerfläche (76) mit dritten Eingriffselementen (73) versehen ist, die dazu konfiguriert sind, mit den ersten Eingriffselementen (13) des Stützkörpers (10) in Eingriff zu kommen.

2. Vorrichtung (100) nach Anspruch 1, wobei die Erfassungsvorrichtung (80) dazu konfiguriert ist, die von der Verschiebevorrichtung (40) auf den Stützkörper (10) oder das Steuerelement (75) ausgeübte Kraft zu erfassen, um den Stützkörper (10) in Bezug auf das Steuerelement (75) zu bewegen, nachdem der Stützkörper (10), oder das auf denselben beschränkte Schleifelement (20), falls vorhanden, mit dem Steuerelement (75) in Kontakt gebracht wurde.

3. Vorrichtung (100) nach Anspruch 1, wobei das Steuerelement (75) betriebsmäßig mit einem festen Grundkörper (71) frei beweglich verbunden ist und wobei die Erfassungsvorrichtung (80) dazu konfiguriert ist, lo Verschiebung des Steuerelements (75) in Bezug auf den festen Grundkörper (71) zu erfassen, die durch die Bewegung des Stützkörpers (10) in Bezug auf das Steuerelement (75) verursacht wird, nachdem der Stützkörper (10), oder das auf denselben beschränkte Schleifelement (20), falls vorhanden, mit dem Steuerelement (75) in Kontakt gebracht wurde.

4. Vorrichtung (100) nach einem der vorhergehenden Ansprüche, wobei die Erfassungsvorrichtung (80) aus der Gruppe ausgewählt ist, die umfasst:
- mindestens einen Kraftsensor;
- mindestens einen Bewegungssensor;
- mindestens einen Beschleunigungsmesser;
- mindestens einen Rotationssensor;
- mindestens einen Encoder;
- mindestens einen Endlagensensor;
oder eine Kombination davon.

5. Vorrichtung (100) nach einem der vorhergehenden Ansprüche, wobei weiterhin ein Anschlagelement (78) vorgesehen ist, das dazu konfiguriert ist, die Bewegung des Steuerelements (75) in Bezug auf den festen Grundkörper (71) zu stoppen und zu bewirken, dass die ersten Eingriffselemente (13) von den dritten Eingriffselementen (73) gelöst werden, wobei das Anschlagelement (78) dazu konfiguriert ist, das Steuerelement (75) in Bezug auf den festen Grundkörper (71) in eine Ausgangsposition zurückzubewegen.

6. Vorrichtung (100) nach einem der vorhergehenden Ansprüche, wobei das Steuerelement (75) dazu konfiguriert ist, sich in Bezug auf den festen Grundkörper (71) zu verschieben, und wobei die Verschiebevorrichtung (40) dazu eingerichtet ist, zu bewirken, dass sich der Stützkörper (10) entlang einer vorgegebenen Verschieberichtung verschiebt.

7. Vorrichtung (100) nach einem der vorhergehenden Ansprüche, wobei das Steuerelement (75) dazu konfiguriert ist, sich um eine erste vorgegebene Drehachse (175) in Bezug auf den festen Grundkörper (71) zu drehen, und wobei die Verschiebevorrichtung (40) dazu eingerichtet ist, zu bewirken, dass sich der Stützkörper (10) um eine zweite vorgegebene Drehachse (110) dreht.

8. Vorrichtung (100) nach Anspruch 3, wobei der feste Grundkörper (71) hohl ist und ein Schaft (72) ist vorgesehen ist, der ein Ende (72a), das gleitend innerhalb des festen hohlen Grundkörpers (71) montiert ist, und ein anderes Ende (72b) aufweist, das an dem Steuerelement (75) befestigt, wobei die Erfassungsvorrichtung (80) dazu eingerichtet ist, die Verschiebung des Steuerelements (75) durch Erfassen der Verschiebung des Schafts (72) zu erfassen.

9. Vorrichtung (100) nach einem der vorhergehenden Ansprüche, wobei die ersten und zweiten Eingriffselemente (13,23) dazu eingerichtet sind, miteinander in Schnappverbindung zu treten.

10. Vorrichtung (100) nach einem der vorhergehenden Ansprüche, wobei die ersten und zweiten Eingriffselemente (13,23) jeweils erste und zweite Klettverschlussabschnitte umfassen, die dazu eingerichtet sind, reversibel gegenseitig ineinander einzugreifen.

11. Vorrichtung (100) nach einem der vorhergehenden Ansprüche, wobei die Verschiebevorrichtung (40) ein anthropomorpher Roboter ist, der eine Anzahl von Freiheitsgraden aufweist, die zwischen 2 und 6 festgelegt ist.

12. Vorrichtung (100) nach einem der vorhergehenden Ansprüche, wobei die Steuervorrichtung (70) eine Vielzahl von Steuerelementen (75a-75d) umfasst, wobei jedes Steuerelement (75a-75d) mit einer entsprechenden Steuerfläche (76a-76d) versehen ist, die mit entsprechenden dritten Eingriffselementen (73a-73d) versehen ist, und wobei jedes dritte Eingriffselement (73a-73d) dazu konfiguriert ist, mit den ersten Eingriffselementen (13) des Stützkörpers (10) oder einem vorbestimmten Abschnitt desselben in Eingriff zu kommen, wobei jedes Steuerelement (75a-75d) der Vielzahl einer entsprechenden Erfassungsvorrichtung (80a-80d) zugeordnet ist, von denen jede dazu konfiguriert ist, zu erfassen, ob ein Eingriff des jeweiligen Steuerelements (75a-75d) mit einem jeweiligen Abschnitt des Stützkörpers (10) während der Bewegung des Stützkörpers (10) durch die Verschiebevorrichtung (40) stattgefunden hat.

13. Vorrichtung (100) nach einem der vorhergehenden Ansprüche, wobei außerdem eine Verarbeitungseinheit (300) vorgesehen ist, die dazu konfiguriert ist, die von der Erfassungsvorrichtung (80) erfassten Daten zu empfangen und zu verarbeiten, und wobei außerdem mindestens eine Entnahmestation vorgesehen ist, die dazu konfiguriert ist, das abgenutzte Schleifelement (20) durch den Stützkörper (10) zu entfernen, wobei die Verarbeitungseinheit (300) dazu konfiguriert ist, der Verschiebevorrichtung (40) zu befehlen, sich erneut an der Steuerstation (250) zu positionieren, um das Vorhandensein oder das Fehlen des Schleifelements (20) an dem Stützkörper (10) erneut zu überprüfen, oder, nachdem an der Steuerstation (250) das Vorhandensein des Stützelements (20) an dem Stützkörper (10) überprüft wurde, zu der Entfernungsstation zurückzukehren und einen Entfernungsvorgang des Schleifelements (20) von dem Stützkörper (10) durchzuführen.

14. Vorrichtung (100) nach Anspruch 13, umfassend außerdem mindestens eine Aufbringstation, die dazu konfiguriert ist, ein neues Schleifelement (20) an dem Stützkörper (10) aufzubringen, wobei die Verarbeitungseinheit (300) dazu konfiguriert ist, der Verschiebevorrichtung (40) zu befehlen, sich erneut an der Steuerstation (250) zu positionieren, um das Vorhandensein oder das Fehlen des Schleifelements (20) an dem Stützkörper (10) erneut zu überprüfen, oder, nachdem an der Steuerstation (250) das Fehlen des Schleifelements (20) an dem Stützkörper (10) überprüft wurde, zu der Entfernungsstation zurückzukehren und einen Anbringungsvorgang des Schleifelements (20) an dem Stützkörper (10) durchzuführen.

15. Ein Verfahren zum Überprüfen des Vorhandenseins oder Fehlens eines Schleifelements (20) mit einer Vorrichtung nach einem der vorherigen Ansprüche in einer Maschine (1) zum Endbearbeiten von Oberflächen sieht die folgenden Schritte vor:
- Bereitstellen eines Stützkörpers (10), der dazu konfiguriert ist, lösbar mit dem Schleifelement (20) in Eingriff zu kommen, wobei der Stützkörper (10) und das Schleifelement (20) an entsprechenden Eingriffsflächen (15,25) jeweils von ersten und zweiten Eingriffselementen (13,23) vorgesehen sind, die dazu konfiguriert sind, sich von einer Eingriffskonfiguration in eine Lösekonfiguration zu bewegen;
- Bereitstellen einer Verschiebevorrichtung (40), die dazu konfiguriert ist, den Stützkörper (10) in dem Raum entsprechend mindestens 1 Freiheitsgrad zu bewegen;
- Bereitstellen eines Steuerelements (75) mit einer Steuerfläche (76);
- Inkontaktbringen des Stützkörpers (10) oder des mit dem Stützkörper (10) in Eingriff stehenden Schleifelements (20), falls vorhanden, mit der Steuerfläche (76);
- Verschieben des Stützkörpers (10) durch die Verschiebevorrichtung (40); und
- Erfassen, durch eine Erfassungsvorrichtung (80), ob während der Bewegung des Stützkörpers (10) durch die Verschiebevorrichtung (40) ein Eingriff zwischen dem Steuerelement (75) und dem Stützkörper (10) stattgefunden hat;
wobei das Verfahren **dadurch gekennzeichnet ist, dass** die Steuerfläche (76) mit dritten Eingriffselementen (73) versehen ist, die dazu konfiguriert sind, mit den ersten Eingriffselementen (13) der Eingriffsfläche des Stützkörpers (10) in Eingriff zu kommen.

## Revendications

1. Appareil (100) destiné à vérifier la présence, ou l'absence, d'un élément abrasif (20) dans une machine (1) pour la finition de surfaces, ladite machine (1) comprenant :
- un corps de support (10) conçu pour mettre en prise de manière amovible ledit élément abrasif (20), ledit corps de support (10) et ledit élément abrasif (20) étant, respectivement, dotés, au niveau de surfaces de mise en prise respectives (15, 25), de premier et deuxième éléments de mise en prise (13, 23) conçus pour se déplacer d'une configuration de mise en prise à une configuration de séparation, et inversement ;
- un dispositif de déplacement (40) conçu pour déplacer ledit corps de support (10) dans l'espace selon au moins 1 degré de liberté ;
ledit appareil (100) comprenant :
- au moins une station de commande (250) agencé pour vérifier la présence, ou l'absence, dudit élément abrasif (20) au niveau dudit corps de support (10) ;
- un dispositif de commande (70) agencé dans ladite station de commande (250) et comprenant un élément de commande (75) possédant une surface de commande (76), ledit dispositif de déplacement (40) étant agencé pour amener ledit corps de support (10), ou l'élément abrasif (20) contraint sur celui-ci, s'il est présent, en contact avec ladite surface de commande (76) dudit élément de commande (75) et pour entraîner un mouvement dudit corps de support (10) ;
- un dispositif de détection (80) conçu pour détecter si une mise en prise entre ledit élément de commande (75) et ledit corps de support (10) a eu lieu, durant ledit mouvement dudit corps de support (10) par ledit dispositif de déplacement (40) ;
ledit appareil étant **caractérisé en ce que** ladite surface de commande (76) est dotée de troisièmes éléments de mise en prise (73) conçus pour se mettre en prise avec lesdits premiers éléments de mise en prise (13) dudit corps de support (10).

2. Appareil (100) selon la revendication 1, ledit dispositif de détection (80) étant conçu pour détecter la force appliquée par ledit dispositif de déplacement (40) sur ledit corps de support (10), ou ledit élément de commande (75), pour déplacer ledit corps de support (10) par rapport audit élément de commande (75), après avoir amené ledit corps de support (10), ou l'élément abrasif (20) contraint sur celui-ci, s'il est présent, en contact avec ledit élément de commande (75).

3. Appareil (100) selon la revendication 1, ledit élément de commande (75) étant fonctionnellement raccordé libre de se déplacer jusqu'à un corps de base fixe (71), et ledit dispositif de détection (80) étant conçu pour détecter le déplacement dudit élément de commande (75) par rapport audit corps de base fixe (71) entraîné par ledit mouvement dudit corps de support (10) par rapport audit élément de commande (75), après avoir amené ledit corps de support (10), ou l'élément abrasif (20) contraint sur celui-ci, s'il est présent, en contact avec ledit élément de commande (75).

4. Appareil (100) selon l'une quelconque des revendications précédentes, ledit dispositif de détection (80) étant sélectionné dans le groupe comprenant :
- au moins un capteur de force ;
- au moins un capteur de mouvement ;
- au moins un accéléromètre ;
- au moins un capteur de rotation ;
- au moins un codeur ;
- au moins un capteur de position limite ;
ou une combinaison de ceux-ci.

5. Appareil (100) selon l'une quelconque des revendications précédentes, un élément de butée (78) étant, en outre prévu, conçu pour arrêter ledit mouvement dudit élément de commande (75) par rapport audit corps de base fixe (71), et pour amener lesdits premiers éléments de mise en prise (13) à se séparer desdits troisièmes éléments de mise en prise (73), ledit élément de butée (78) étant conçu pour ramener ledit élément de commande (75) vers une position de départ par rapport audit corps de base fixe (71).

6. Appareil (100) selon l'une quelconque des revendications précédentes, ledit élément de commande (75) étant conçu pour se translater par rapport audit corps de base fixe (71), et ledit dispositif de déplacement (40) étant agencé pour entraîner la translation dudit corps de support (10) selon une direction de translation prédéfinie.

7. Appareil (100) selon l'une quelconque des revendications précédentes, ledit élément de commande (75) étant conçu pour tourner autour d'un premier axe de rotation prédéfini (175) par rapport audit corps de base fixe (71), et ledit dispositif de déplacement (40) étant agencé pour entraîner la rotation dudit corps de support (10) autour d'un second axe de rotation prédéfini (110).

8. Appareil (100) selon la revendication 3, ledit corps de base fixe (71) étant creux et étant une tige (72) qui est prévue de posséder une extrémité (72a) montée de manière coulissante à l'intérieur dudit corps de base creux fixe (71) et une autre extrémité (72b) fixée audit élément de commande (75), ledit dispositif de détection (80) étant agencé pour détecter le déplacement dudit élément de commande (75) en détectant le déplacement de ladite tige (72).

9. Appareil (100) selon l'une quelconque des revendications précédentes, lesdits premiers et deuxièmes éléments de mise en prise (13, 23) étant agencés pour venir en prise par encliquetage les uns avec les autres.

10. Appareil (100) selon l'une quelconque des revendications précédentes, lesdits premiers et deuxièmes éléments de mise en prise (13, 23) comprenant, respectivement, des premières et secondes parties de velcro agencées pour venir en prise mutuellement de manière réversible les unes avec les autres.

11. Appareil (100) selon l'une quelconque des revendications précédentes, ledit dispositif de déplacement (40) étant un robot anthropomorphe possédant un nombre de degrés de liberté défini entre 2 et 6.

12. Appareil (100) selon l'une quelconque des revendications précédentes, ledit dispositif de commande (70) comprenant une pluralité d'éléments de commande (75a-75d), chaque élément de commande (75a-75d) étant doté d'une surface de commande respective (76a-76d) dotée de troisièmes éléments de mise en prise respectifs (73a-73d), et chaque troisième élément de mise en prise (73a-73d) étant conçu pour venir en prise avec lesdits premiers éléments de mise en prise (13) dudit corps de support (10), ou une partie prédéfinie de celui-ci, chaque élément de commande (75a-75d) de ladite pluralité étant associé à un dispositif de détection respectif (80a-80d), dont chacun est conçu pour détecter si une mise en prise de l'élément de commande respectif (75a-75d) avec une partie respective dudit corps de support (10) a eu lieu, durant le mouvement dudit corps de support (10) par ledit dispositif de déplacement (40).

13. Appareil (100) selon l'une quelconque des revendications précédentes, une unité de traitement (300) étant, en outre prévue, conçue pour recevoir et élaborer les données détectées par ledit dispositif de détection (80) et au moins une station de retrait étant, en outre prévue, conçue pour enlever ledit élément abrasif usé (20) par ledit corps de support (10), ladite unité de traitement (300) étant conçue pour commander audit dispositif de déplacement (40) de se positionner à nouveau au niveau de ladite station de commande (250) pour vérifier à nouveau la présence, ou l'absence, dudit élément abrasif (20) au niveau dudit corps de support (10), ou, après avoir vérifié au niveau de ladite station de commande (250) la présence dudit élément de support (20) sur ledit corps de support (10), de retourner à ladite station de retrait et d'effectuer une opération de retrait dudit élément abrasif (20) dudit corps de support (10).

14. Appareil (100) selon la revendication 13, comprenant, en outre, au moins une station d'application conçue pour appliquer un nouvel élément abrasif (20) sur ledit corps de support (10), ladite unité de traitement (300) étant conçue pour commander audit dispositif de déplacement (40), de se positionner à nouveau au niveau de ladite station de commande (250) pour vérifier à nouveau la présence, ou l'absence, dudit élément abrasif (20) au niveau dudit corps de support (10), ou après avoir vérifié au niveau de ladite station de commande (250) l'absence dudit élément abrasif (20) au niveau dudit corps de support (10) de retourner à ladite station de retrait et effectuer une opération d'application dudit nouvel élément abrasif (20) au niveau dudit corps de support (10).

15. Procédé permettant de vérifier la présence, ou l'absence, d'un élément abrasif (20) avec un appareil selon l'une quelconque des revendications précédentes dans une machine (1) pour la finition de surfaces prévoyant les étapes de :
- fourniture d'un corps de support (10) conçu pour venir en prise de manière amovible avec ledit élément abrasif (20), ledit corps de support (10) et ledit élément abrasif (20) étant prévus, au niveau de surfaces de mise en prise respectives (15, 25), respectivement des premiers et deuxièmes éléments de mise en prise (13, 23) conçus pour se déplacer d'une configuration de mise en prise à une configuration de séparation ;
- fourniture d'un dispositif de déplacement (40) conçu pour déplacer ledit corps de support (10) dans l'espace selon au moins 1 degré de liberté ;
- fourniture d'un élément de commande (75) possédant une surface de commande (76) ;
- entraînement dudit corps de support (10), ou dudit élément abrasif (20) en prise sur ledit corps de support (10), s'il est présent, pour venir en contact avec ladite surface de commande (76) ;
- déplacement dudit corps de support (10) par ledit dispositif de déplacement (40) ; et
- détection pour savoir si une mise en prise quelconque entre ledit élément de commande (75) et ledit corps de support (10) a eu lieu, par un dispositif de détection (80), durant ledit mouvement dudit corps de support (10) par ledit dispositif de déplacement (40) ;
ledit procédé étant **caractérisé en ce que** ladite surface de commande (76) est dotée de troisièmes éléments de mise en prise (73) conçus pour venir en prise avec lesdits premiers éléments de mise en prise (13) de ladite surface de mise en prise dudit corps de support (10).
